# EUROPÄISCHE PATENTANMELDUNG

(11) **EP 2 034 561 A1**
(43) Veröffentlichungstag der Anmeldung: **11.03.2009**
(21) Anmeldenummer: 08105232.6
(22) Anmeldetag: 04.09.2008
(51) Int. Cl.: H01R 13/41, H01R 13/52

(54) **Einrichtung zur kraftstoffdichten Durchführung von elektrischen Kontaktelementen durch eine Wandung, sowie derartiges Kontaktelement**

(30) Priorität: 07.09.2007 DE 102007042589
(71) Anmelder: Continental Automotive GmbH, 30165 Hannover (DE)
(72) Erfinder: Pfeifer, Manfred, 61130, Nidderau (DE); Rauchhaus, Günter, 65479, Raunheim (DE)

(57) **Zusammenfassung**

Die Erfindung betrifft ein elektrisches Kontaktelement (5), das zumindest abschnittsweise stiftartig ausgebildet ist und ein Tannenbaumprofil (35) aufweist und eine Einrichtung (1) zur gas- und insbesondere kraftstoffdichten Durchführung von elektrischen Kontaktelementen (5) durch eine Wandung (4), insbesondere durch die Wandung (4) eines Kraftstoffbehälters, wobei die Einrichtung (1) einen elektrischen Steckverbinder (3) mit einem Steckverbindergehäuse (2) und zumindest einem, zumindest abschnittsweise stiftartigen, durch eine im Steckverbindergehäuse (2) vorgesehene, durchgehende Durchstecköffnung (6) durchgeführten, elektrischen Kontaktelement (5), aufweist, wobei das Kontaktelement (5) im Bereich der Durchstecköffnung (6) zumindest abschnittsweise ein Tannenbaumprofil (35) aufweist.

## Beschreibung

Die Erfindung betrifft eine Einrichtung zur gas-, insbesondere kraftstoffdichten, Durchführung von elektrischen Kontaktelementen durch eine Wandung, insbesondere durch die Wandung eines Kraftstoffbehälters, mit einem in eine Öffnung in der Wandung einsetzbaren Steckverbindergehäuse und zumindest einem durch das Steckverbindergehäuse durchgeführten elektrischen Kontaktelement, sowie ein derartiges Kontaktelement.

Eine derartige Einrichtung ist beispielsweise aus der DE 101 17 976 A1 bekannt. Diese Einrichtung dient zur Durchführung von elektrischen Leitungen durch die Wandung eines Kraftstoffbehälters und weist ein in eine Öffnung des Kraftstoffbehälters eingesetztes und diese dichtend abschließendes Trägerelement und zumindest ein durch das Trägerelement zu der Außenseite des Kraftstoffbehälters durchgeführtes Kontaktelement auf. Gemäß der DE 101 17 976 A weist das Trägerelement zumindest eine aus Glas oder Keramik gefertigte Ummantelung für die Kontaktelemente auf. Bei den Kontaktelementen handelt es sich z.B. um stiftartige Kontaktelemente aus Metall mit rundem Querschnitt.

Die DE 101 28 301 A1 offenbart eine Einrichtung zur Durchführung eines elektrischen Kontaktelements durch eine Wandung, insbesondere durch eine Wandung eines Kraftstoffbehälters, wobei das Kontaktelement und eine einen Teilbereich des Kontaktelements umschließende Ummantelung aus einem isolierenden Material als bauliche Einheit gestaltet ist. Insbesondere weist die Ummantelung dabei eine konische Form auf. Zudem weist das Kontaktelement vorzugsweise im Bereich der Ummantelung zwei Querschnittsveränderungen auf. Insbesondere weist das Kontaktelement im Bereich der Ummantelung eine Querschnittsverjüngung auf. Die Herstellung der gasdichten Durchführung erfolgt gemäß der DE 101 28 301 A1 dadurch, dass das Kontaktelement in eine Werkzeugform eingelegt und in der Werkzeugform ein Teilbereich des Kontaktelements mit einer Ummantelung aus einem isolierenden Material umschlossen wird und dass anschließend die Ummantelung mittelbar oder unmittelbar mit der Wandung verbunden wird.

Die genannten Einrichtungen haben sich bewährt. Allerdings nehmen die Anforderungen, die an die Dichtheit solcher Einrichtungen gestellt werden, immer mehr zu, da insbesondere die Drücke, denen die Einrichtungen ausgesetzt sind, stetig ansteigen.

Aufgabe der vorliegenden Erfindung ist die Bereitstellung einer Einrichtung zur gas-, insbesondere kraftstoffdichten, Durchführung von elektrischen Kontaktelementen durch eine Wandung, insbesondere durch die Wandung eines Kraftstoffbehälters, die die Dichtheit auch bei hohen Drücken gewährleistet.

Weitere Aufgabe ist die Bereitstellung eines einfach aufgebauten, vorzugsweise länglichen, elektrischen Kontaktelements, das durch eine in einem Bauteil vorgesehene, durchgehende Öffnung diese abdichtend einsetzbar ist, wobei auch bei hohen Drücken die Dichtheit der Verbindung gewährleistet ist.

Diese Aufgaben werden durch ein Kontaktelement mit den Merkmalen des Anspruchs 1 und eine Einrichtung mit den Merkmalen des Anspruchs 13 gelöst. Vorteilhafte Weiterbildungen der Erfindung sind in den sich anschließenden Unteransprüchen gekennzeichnet.

Das erfindungsgemäße Kontaktelement weist zumindest abschnittsweise ein Tannenbaumprofil auf.

Gemäß der Erfindung weist die Einrichtung einen elektrischen Steckverbinder mit einem Steckverbindergehäuse und zumindest einem vorzugsweise stiftartigen, durch eine im Steckverbindergehäuse vorgesehene, durchgehende Durchstecköffnung durchgeführten, elektrischen Kontaktelement, auf, wobei das Kontaktelement im Bereich der Durchstecköffnung zumindest abschnittsweise ein Tannenbaumprofil aufweist.

Im Folgenden wird die Erfindung anhand der Zeichnung beispielhaft näher erläutert. Es zeigen:
- Fig. 1: einen Längsschnitt durch die erfindungsgemäße Einrichtung,
- Fig. 2: ein erfindungsgemäßes Kontaktelement gemäß Fig. 1 in Alleinstellung,
- Fig. 3: schematisch ein erfindungsgemäßes Tannenbaumprofil nach einer weiteren Ausführungsform.

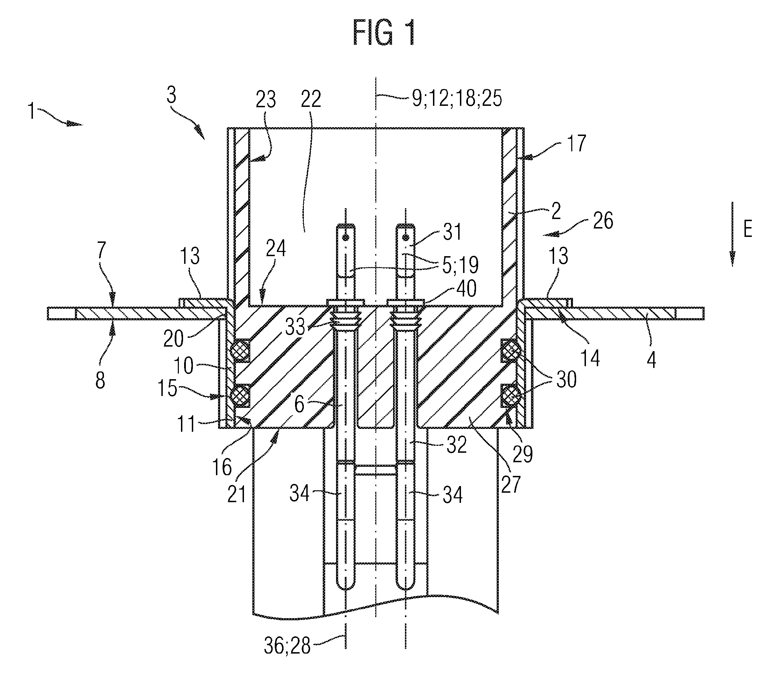

Die erfindungsgemäße Einrichtung 1 (Fig. 1) weist einen elektrischen Steckverbinder 3 mit einem Trägerelement bzw. Steckverbindergehäuse 2 und zumindest einem, vorzugsweise mehreren (Fig. 1) stiftartigen, elektrischen Kontaktelementen 5 auf, wobei die Kontaktelemente 5 jeweils durch in dem Steckverbindergehäuse 2 vorgesehene, durchgehende Durchstecköffnungen 6 durchgeführt sind. Vorzugsweise weist die Einrichtung 1 zudem eine Hülse 10 auf, in der das Steckverbindergehäuse 2 aufgenommen ist, und die in eine durchgehende, in einer Wandung 4 vorgesehene Öffnung diese abdichtend einsetzbar ist, auf.

Nach einer alternativen Ausführungsform (nicht dargestellt) ist das Steckverbindergehäuse 2 so gestaltet, dass es direkt in die in der Wandung 4 vorgesehene Öffnung diese abdichtend einsetzbar ist, worauf weiter unten näher eingegangen wird.

Bei der Wandung 4 handelt es sich z. B. um eine Gehäusewandung, insbesondere eine Wandung eines Flansches oder eines Kraftstoffbehälters. Die Wandung 4 trennt also beispielsweise ein Gehäuseinneres von einem Gehäuseäußeren (nicht dargestellt) und weist eine, vorzugsweise ebene, Wandungsaußenseite 7 und eine, vorzugsweise ebenfalls ebene, zweckmäßigerweise zur Wandungsaußenseite 7 parallele, Wandungsinnenseite 8 auf. Die Öffnung erstreckt sich von der Wandungsaußenseite 7 zur Wandungsinnenseite 8 durch die Wandung 4 durch. Zudem weist die Öffnung eine vorzugsweise kreiszylindrisch ausgebildete Öffnungswandung 20 auf, wobei eine Öffnungszylinderachse 9 senkrecht zur Wandungsaußenseite 7 ist. Die Wandung 4 besteht beispielsweise aus Metall oder aus Kunststoff.

Die Hülse 10 weist einen hohlzylindrischen Hülsenabschnitt 11 mit einer Hülsenzylinderachse 12 und einen sich einendig daran anschließenden Hülsenflansch 13 auf. Der Hülsenflansch 13 erstreckt sich senkrecht zu einer Hülsenzylinderachse 12 und weist eine ebene Flanschunterseite 14 auf. Der Durchmesser einer Hülsenaußenwandung 15 des hohlzylindrischen Hülsenabschnitts 11 entspricht dem Durchmesser der Öffnungswandung 20 oder ist geringfügig größer als dieser. Vorzugsweise ist eine Presspassung zwischen Hülsenaußenwandung 15 und Öffnungswandung 20 vorgesehen. Im montierten Zustand der erfindungsgemäßen Einrichtung 1 ist die Hülse 10 somit in der Öffnung durch die Presspassung die Öffnung abdichtend angeordnet, wobei der Hülsenflansch 13 mit seiner ebenen Flanschunterseite 14 auf der Wandungsaußenseite 7 der Wandung 4 aufliegt und der hohlzylindrische Hülsenabschnitt 11 mit seiner Hülsenaußenwandung 15 an der Öffnungswandung 20 dichtend anliegt. Im montierten Zustand sind also die Hülsenzylinderachse 12 und die Öffnungsachse 9 koaxial zueinander angeordnet.

Die Hülse 10 besteht vorzugsweise aus Metall und/oder Kunststoff.

Das Steckverbindergehäuse 2 des Steckverbinders 3 ist vorzugsweise als gerader Kreiszylinder mit einer Gehäusezylinderachse 18 ausgebildet und weist eine zylindrische Gehäuseaußenwandung 17 auf. Der Durchmesser der Gehäuseaußenwandung 17 entspricht dabei vorzugsweise dem Durchmesser einer Hülseninnenwandung 16 des hohlzylindrischen Hülsenabschnitts 11 oder ist geringfügig kleiner.

Des Weiteren weist das Steckverbindergehäuse 2 einen hohlzylindrischen, eine Gegensteckverbinderaufnahmeaussparung 22 aufweisenden Gegensteckverbinderaufnahmeabschnitt 26 und einen sich daran in Richtung der Gehäusezylinderachse 18 anschließenden, vollzylindrischen Kontaktelementdurchsteckabschnitt bzw. Dichtungsabschnitt bzw. Kontaktelementaufnahmeabschnitt 27 auf.

Der Gegensteckverbinderaufnahmeabschnitt 26, insbesondere die Gegensteckverbinderaufnahmeaussparung 22, dienen zur Aufnahme eines Gegensteckverbinders (nicht dargestellt), der die Kontaktelemente 5 elektrisch kontaktiert. Die Gegensteckverbinderaufnahmeaussparung 22 erstreckt sich dazu vorzusweise parallel zur Gehäusezylinderachse 18 in das Steckverbindergehäuse 2 hinein und weist eine, zweckmäßigerweise kreiszylindrische, Aussparungswandung 23 und einen Aussparungsboden 24 auf. Der Aussparungsboden 24 ist zweckmäßigerweise eben ausgebildet und senkrecht zur Gehäusezylinderachse 18 ausgerichtet. Zudem ist eine Aussparungszylinderachse 25 vorzugsweise koaxial zur Gehäusezylinderachse 18. Insbesondere ist die Gegensteckverbinderaufnahmeaussparung 22 korrespondierend zu einem Gegensteckverbindergehäuse (nicht dargestellt) ausgebildet, so dass dieses formschlüssig in der Gegensteckverbinderaufnahmeaussparung 22 aufnehmbar ist. Infolgedessen kann die Gegensteckverbinderaufnahmeaussparung 22 auch im Querschnitt anstelle kreisförmig rechteckig oder quadratisch ausgebildet sein.

Zudem weist der Kontaktelementdurchsteckabschnitt 27 einen, vorzugsweise zur Gehäusezylinderachse 18 senkrechten, Gehäuseboden bzw. eine Gehäusegrundfläche 21 auf.

Die Durchstecköffnungen 6 des Steckverbindergehäuses 2 sind im Kontaktelementdurchsteckabschnitt 27 des Steckverbindergehäuses 2 vorgesehen und erstrecken sich durchgehend vom Aussparungsboden 24 durch den Kontaktelementdurchsteckabschnitt 27 durch zum Gehäuseboden 21. Dabei sind die Durchstecköffnungen 6 kreiszylindrisch ausgebildet und weisen vorzugsweise Durchstecköffnungsachsen 28 auf, die parallel zur Gehäusezylinderachse 18, also senkrecht zum Aussparungsboden 24, sind. Zudem sind die Durchstecköffnungen 6 vorzugsweise symmetrisch zur Gehäusezylinderachse 18 angeordnet. Die Anordnung der Durchstecköffnungen 6 ist im Übrigen aber durch die Anordnung der in die Durchstecköffnungen 6 eingepressten Kontaktelemente 5 vorgegeben, deren Anordnung wiederum von den Anschlusskontaktelementen vorgegeben ist, an die die Kontaktelemente 5 innen- und außenseitig in Bezug zur Wandung 7 elektrisch kontaktieren sollen.

Das Steckverbindergehäuse 2 weist außerdem zumindest eine, vorzugsweise zwei Ringnuten 29 auf, die zur Aufnahme von Dichtungsringen 30, insbesondere O-Ringen, aus gummielastischem Material dienen. Die Ringnuten 29 sind im Bereich des Kontaktelementdurchsteckabschnitts 27 in die Gehäuseaußenwandung 17 eingebracht.

Des Weiteren besteht das Steckverbindergehäuse 2 aus elektrisch isolierendem Material, vorzugsweise aus Kunststoff.

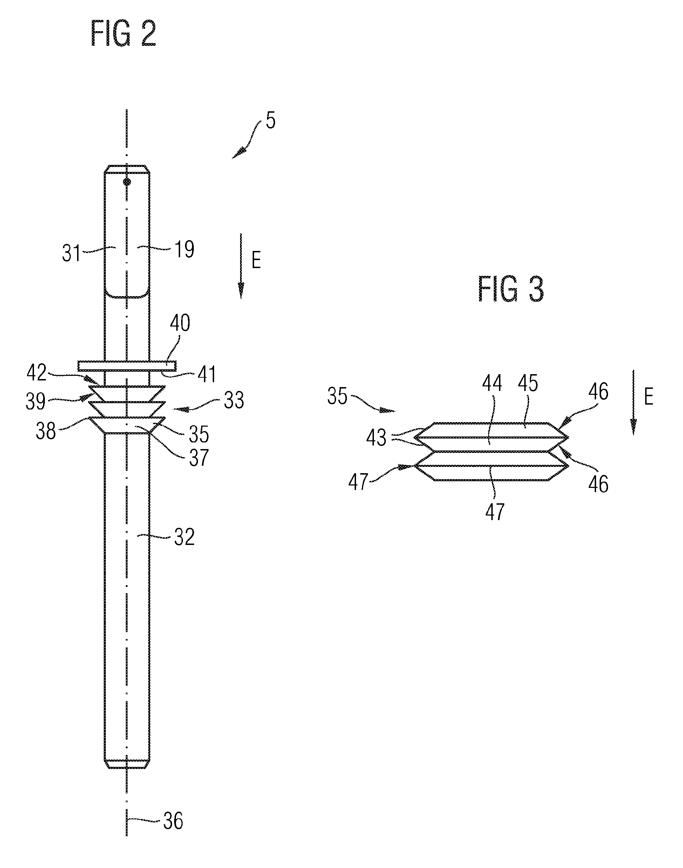

Bei dem länglich ausgebildeten Kontaktelement 5 (Fig. 1, 2) handelt es sich vorzugsweise um einen Steckerpin 19. Das Kontaktelement 5 weist in Richtung seiner Längserstreckung gesehen zwei Kontaktierungsbereiche 31; 32 und einen dazwischen liegenden, stiftartigen Dichtbereich 33 auf. Die Kontaktierungsbereiche 31; 32 dienen zur elektrisch leitenden Kontaktierung des Kontaktelements 5 mit den oben genannten Anschlusskontaktelementen und sind dementsprechend jeweils korrespondierend zu diesen, insbesondere stiftartig und mit rundem Querschnitt, ausgebildet. Beispielsweise sind als Anschlusskontaktelemente in Bezug zur Wandung 4 innenseitig Kabel 34 vorgesehen, die die Kontaktelemente 5 mit dem elektrischen Verbraucher verbinden. Zudem ist der in Einsteckrichtung E gesehen zweite bzw. in Bezug zur Wandung 4 gesehen innere Kontaktierungsbereich 32 so ausgebildet, dass er problemlos durch die Durchstecköffnungen 6 durchführbar ist.

Der Dichtbereich 33 weist gemäß der Erfindung ein Tannenbaumprofil 35 auf. Das Tannenbaumprofil 35 weist zumindest einen, vorzugsweise mehrere, bevorzugt drei, sich in Richtung einer Elementlängsachse 36 aneinander anschließende Kegelabschnitte bzw. konische Abschnitte 37 auf. Die konischen Abschnitte 37 sind dabei sich in einer zur Elementlängsachse 36 parallelen Einsteckrichtung E hin verjüngend ausgebildet und weisen je eine zur Elementlängsachse 36 senkrechte Konusgrundfläche 42, eine konische Mantelfläche 39 und eine durch die Schnittlinie von Konusgrundfläche 42 und Mantelfläche 39 definierte, umlaufende bzw. ringförmige Kante 38 auf. Der Durchmesser der Kanten 38, also der maximale Durchmesser, den die konischen Abschnitte 37 aufweisen, entspricht dabei dem Durchmesser der Durchstecköffnungen 6 oder ist geringfügig größer als dieser, so dass die konischen Abschnitte 37 in die Durchstecköffnungen 6 einpressbar bzw. im montierten Zustand eingepresst sind. Zwischen den Kanten 38 und den Durchstecköffnungen 6 ist also eine Presspassung vorgesehen. Vorzugsweise weisen die einzelnen konischen Abschnitte 37 zudem die gleiche Konizität auf.

Gemäß einer weiteren Ausführungsform der Erfindung (Fig. 3) weist das Tannenbaumprofil 35 zumindest ein, vorzugsweise mehrere, bevorzugt drei, Paare 43 von zueinander gegenläufigen konischen Abschnitten 44; 45 auf. Dabei ist jeweils ein Abschnitt 44 sich in Einsteckrichtung E hin verjüngend ausgebildet und der andere Abschnitt 45 sich in Einsteckrichtung E hin erweiternd ausgebildet. Beide Abschnitte 44; 45 weisen je eine konische Mantelfläche 46 auf und legen eine durch die Schnittlinie von den beiden Mantelflächen 44; 45 definierte, umlaufende bzw. ringförmige Kante 47 fest. Der Durchmesser der Kanten 47, also der maximale Durchmesser, den die konischen Abschnitte 44; 45 aufweisen, entspricht dabei dem Durchmesser der Durchstecköffnungen 6 oder ist geringfügig größer als dieser, so dass die konischen Abschnitte 44; 45 in die Durchstecköffnungen 6 einpressbar bzw. im montierten Zustand eingepresst sind. Zwischen den Kanten 47 und den Durchstecköffnungen 6 ist also eine Presspassung vorgesehen. Vorzugsweise weisen die einzelnen konischen Abschnitte 44; 45 zudem die gleiche Konizität auf.

Des Weiteren weist das Tannenbaumprofil 35 vorzugsweise eine Länge von 4 bis 5 mm auf und die Kanten 38; 47 weisen vorzugsweise einen Durchmesser von 3,05 bis 3,3 mm auf. Die Bohrung im Gehäuse weist vorzugsweise einen Durchmesser von 2,97 mm auf bei einer Länge von vorzugsweise 5 mm.

Als nächstes weist das Kontaktelement 5 vorzugsweise einen Montagebund 40 auf, der zwischen dem Dichtbereich 33 und dem in Einsteckrichtung E gesehen ersten bzw. in Bezug zur Wandung 4 gesehen äußeren Kontaktierungsbereich 31 vorgesehen ist. Der Durchmesser des Montagebundes 40 ist dabei größer als der Durchmesser der Durchstecköffnungen 6, so dass der Montagebund 40 als Anschlag bei der Montage bzw. beim Einpressen der Kontaktelemente 5 in die Durchstecköffnungen 6 dient. Dazu ist eine dem Dichtbereich 33 zugewandte Bundauflagefläche 41 ebenflächig ausgebildet.

Des Weiteren besteht der Steckerpin 19 aus elektrisch leitendem Material, vorzugsweise aus Metall, und ist eigensteif ausgebildet.

Gemäß einer weiteren, nicht dargestellten Ausführungsform der Erfindung ist das Kontaktelement 5 nur im Dichtbereich 33 stiftartig und eigensteif ausgebildet und die Kontaktierungsbereiche 31; 32 sind als flexible Leiter, z. B. Drähte und/oder Kabel ausgebildet. Um die Dichtheit zu gewährleisten ist das erfindungsgemäße Kontaktelement 5 also zumindest abschnittsweise, insbesondere im Dichtbereich 33, also im Bereich des Tannenbaumprofils 35, stiftartig und eigensteif ausgebildet.

Im Folgenden wird nun auf die Montage der erfindungsgemäßen Einrichtung 1 in die Öffnung der Wandung 4 eingegangen.

Dazu werden zunächst die Kontaktelemente 5 von der Einsteckseite 20 her mit dem äußeren Kontaktierungsbereich 32 voraus in die Durchstecköffnungen 6 eingeführt, bis die Bundauflagefläche 41 auf dem Aussparungsboden 24 aufliegt. Dabei wird der Dichtbereich 33 in die Durchstecköffnungen 6 eingepresst. Als nächstes wird das mit den Dichtungsringen 30 bestückte Steckverbindergehäuse 2 in die Hülse 10 eingeführt. Durch die Dichtungsringe 30 wird der Dichtspalt zwischen den beiden Bauteilen überbrückt und das Steckverbindergehäuse 2 ist so in der Hülse 10 gelagert, dass die Verbindung zwischen den beiden Bauteilen gas- und insbesondere kraftstoffdicht ist. Das Steckverbindergehäuse 2 wird dabei vorzugsweise soweit eingeführt, dass der Gehäuseboden 21 des Steckverbindergehäuses 2 und die Hülse 10 bündig abschließen.

Die erfindungsgemäße Einrichtung 1 stellt nun eine aus Steckverbindergehäuse 2, Hülse 10 und Kontaktelementen 5 bestehende vormontierte Einheit dar. Als diese wird sie von der Wandungsaußenseite 7 her mit dem Kontaktelementdurchsteckbereich 27 voraus in die Öffnung eingeführt, bis die Flanschunterseite 14 des Hülsenflansches 13 auf der Wandungsaußenseite 7 aufliegt. Dabei wird die Hülse 10 in die Öffnung der Wandung 4 eingepresst, wodurch die Dichtheit zwischen der Hülse 10 und der Wandung 4 gewährleistet wird. Vorzugsweise ist das Steckverbindergehäuse 2 dabei so bemessen, dass der Aussparungsboden 24 auf gleicher Höhe mit der Wandungsaußenseite 7 angeordnet ist.

Nach einer weiteren, noch einfacher aufgebauten vorteilhaften Ausführungsform der Erfindung (nicht dargestellt) weist die Einrichtung 1 keine Hülse 10 auf. Stattdessen ist ein dem Hülsenflansch 13 entsprechender Bund an die Gehäuseaußenwandung 17 angeformt, der als Anschlag bei der Montage der Einrichtung 1 in die Öffnung dient und der Durchmesser der Gehäuseaußenwandung 17 im Kontaktelementdurchsteckabschnitt 27 entspricht dem Durchmesser der Öffnungswandung 20, so dass das Steckverbindergehäuse 2 direkt in die Öffnung einpressbar bzw. eingepresst ist. Alternativ dazu ist der Durchmesser der Gehäusewandung 17 etwas geringer als der Durchmesser der Öffnungswandung 20 und die Abdichtung erfolgt über die Dichtungsringe 30.

Die erfindungsgemäße Einrichtung ist einfach aufgebaut, somit kostengünstig herstellbar und sehr einfach zu montieren.

Durch die sich in Einsteckrichtung E verjüngende Ausbildung der konischen Bereiche 37 wirken die Mantelflächen 39 als Montagefasen und erleichtern dadurch die Montage der Steckerpins 19 in die Durchstecköffnungen 6. Durch die zur Pinlängsachse 36 und somit zur Einsteckrichtung E senkrechten Konusgrundflächen 42 und die dadurch gebildeten Kanten 38 und die zwischen den Kanten 38 und den Durchstecköffnungen 6 vorgesehene Presspassung, ist die Demontage der Steckerpins 19 dagegen nur noch mit erhöhtem Kraftaufwand möglich. Dadurch wird ein Steckerpin 19 auch bei Beaufschlagung mit hohen Drücken von bis zu 6 bar vom Inneren des Gehäuses, also der Wandungsinnenseite 8, aus sicher in der jeweiligen Durchstecköffnung 6 gehalten. Bei Beaufschlagung mit Druck von der Wandungsaußenseite 7 her wirkt der Montagebund 40 als Widerlager für die Bewegung der Steckerpins 19 in Einsteckrichtung E, so dass auch hier ein Durchrutschen der Steckerpins 19 durch die Durchstecköffnungen 6 verhindert wird.

Somit wird die Dichtheit der erfindungsgemäßen Einrichtung 1 auf überraschend einfache Weise auch bei hohen Drücken gewährleistet.

Das erfindungsgemäße Kontaktelement ist zudem vielseitig einsetzbar. Es kann beispielsweise auch ohne Steckverbindergehäuse 2 direkt in eine in einer Wandung 4 aus elektrisch isolierendem Material vorgesehene Öffnung eingepresst werden und somit gasdicht durch die Öffnung durchgeführt werden (nicht dargestellt).

## Patentansprüche

1. Elektrisches Kontaktelement, **dadurch gekennzeichnet, dass** das Kontaktelement (5) zumindest abschnittsweise ein Tannenbaumprofil (35) aufweist.

2. Kontaktelement nach Anspruch 1, **dadurch gekennzeichnet, dass** das Kontaktelement (5) zumindest im Bereich des Tannenbaumprofils (35) stiftartig und eigensteif ausgebildet ist und eine Elementlängsachse (36) aufweist.

3. Kontaktelement nach Anspruch 2, **dadurch gekennzeichnet, dass** das Kontaktelement (5) ein Steckerpin (19) ist.

4. Kontaktelement nach Anspruch 2 und/oder 3, **dadurch gekennzeichnet, dass** das Tannenbaumprofil (35) zumindest einen, vorzugsweise mehrere, bevorzugt drei, sich in Richtung der Elementlängsachse (36) aneinander anschließende konische Abschnitte (37) aufweist.

5. Kontaktelement nach Anspruch 4, **dadurch gekennzeichnet, dass** die konischen Abschnitte (37) sich in Einsteckrichtung (E) gesehen verjüngend ausgebildet sind.

6. Kontaktelement nach Anspruch 4 und/oder 5, **dadurch gekennzeichnet, dass** die konischen Abschnitte (37) je eine zur Pinlängsachse (36) senkrechte Konusgrundfläche (42), eine konische Mantelfläche (39) und eine durch die Schnittlinie von Konusgrundfläche (42) und Mantelfläche (39) definierte, umlaufende bzw. ringförmige Kante (38) aufweisen.

7. Kontaktelement nach einem oder mehreren der Ansprüche 4 bis 6, **dadurch gekennzeichnet, dass** die einzelnen konischen Abschnitte (37) die gleiche Konizität aufweisen.

8. Kontaktelement nach Anspruch 2 und/oder 3, **dadurch gekennzeichnet, dass** das Tannenbaumprofil (35) zumindest einen, vorzugsweise mehrere bevorzugt drei, sich in Richtung der Elementlängsachse (36) aneinander anschließende Paare (43) von zueinander gegenläufigen konischen Abschnitten (44; 45) aufweist, wobei jeweils ein Abschnitt (44) sich in Einsteckrichtung (E) hin verjüngend ausgebildet und der andere Abschnitt (45) sich in Einsteckrichtung (E) hin erweiternd ausgebildet ist.

9. Kontaktelement nach Anspruch 8, **dadurch gekennzeichnet, dass** beide konischen Abschnitte (44; 45) je eine konische Mantelfläche (46) aufweisen und eine durch die Schnittlinie von den beiden Mantelflächen (44; 45) definierte, umlaufende bzw. ringförmige Kante (47) festlegen.

10. Kontaktelement nach einem oder mehreren der Ansprüche 2 bis 9, **dadurch gekennzeichnet, dass** das Kontaktelement (5) in Richtung der Elementlängsachse (36) gesehen zwei Kontaktierungsbereiche (31; 32) zur elektrisch leitenden Kontaktierung des Steckerpins (19) mit Anschlusskontaktelementen und einen dazwischen liegenden Dichtbereich (33) aufweist.

11. Kontaktelement nach Anspruch 10, **dadurch gekennzeichnet, dass** das Kontaktelement (5) einen Montagebund (40) aufweist, der zwischen dem Dichtbereich (33) und dem in Einsteckrichtung E gesehen ersten Kontaktierungsbereich (31) vorgesehen ist.

12. Kontaktelement nach einem oder mehreren der vorhergehenden Ansprüche, **dadurch gekennzeichnet, dass** die Kontaktierungsbereiche (31; 32) stiftartig und eigensteif oder als flexible Leiter, z. B. Drähte und/oder Kabel, ausgebildet sind.

13. Einrichtung (1) zur gas- und insbesondere kraftstoffdichten Durchführung von elektrischen Kontaktelementen (5) durch eine Wandung (4), insbesondere durch die Wandung (4) eines Kraftstoffbehälters, wobei die Einrichtung (1) einen elektrischen Steckverbinder (3) mit einem Steckverbindergehäuse (2) und zumindest einem durch eine im Steckverbindergehäuse (2) vorgesehene, durchgehende Durchstecköffnung (6) durchgeführten, elektrischen Kontaktelement (5), insbesondere einem Kontaktelement (5) nach einem oder mehreren der vorhergehenden Ansprüche, aufweist, **dadurch gekennzeichnet, dass** das Kontaktelement (5) im Bereich der Durchstecköffnung (6) zumindest abschnittsweise ein Tannenbaumprofil (35) aufweist.

14. Einrichtung nach Anspruch 13, **dadurch gekennzeichnet, dass** das Kontaktelement (5) im Bereich des Tannenbaumprofils (35) in die Durchstecköffnung (6) eingepresst ist.

15. Einrichtung nach Anspruch 14, **dadurch gekennzeichnet, dass** zwischen den Kanten (38; 47) und den Durchstecköffnungen (6) eine Presspassung vorgesehen ist.

16. Einrichtung nach einem oder mehreren der Ansprüche 13 bis 15, **dadurch gekennzeichnet, dass** das Kontaktelement (5) mit dem Dichtbereich (33) im Bereich der Durchstecköffnung (6) angeordnet ist und dass das Kontaktelement (5) im Bereich des Dichtbereichs (33) das Tannenbaumprofil (35) aufweist.

17. Einrichtung nach einem oder mehreren der Ansprüche 13 bis 16, **dadurch gekennzeichnet, dass** das Steckverbindergehäuse (2) einen eine Gegensteckverbinderaufnahmeaussparung (22) aufweisenden Gegensteckverbinderaufnahmeabschnitt (26) und einen Kontaktelementdurchsteckabschnitt (27) aufweist.

18. Einrichtung nach Anspruch 17, **dadurch gekennzeichnet, dass** die Gegensteckverbinderaufnahmeaussparung (22) korrespondierend zu einem Gegensteckverbindergehäuse ausgebildet ist, so dass dieses formschlüssig in der Gegensteckverbinderaufnahmeaussparung (22) aufnehmbar ist.

19. Einrichtung nach Anspruch 17 und/oder 18, **dadurch gekennzeichnet, dass** die Durchstecköffnungen (6) im Kontaktelementdurchsteckabschnitt (27) angeordnet sind und sich durchgehend von einem Aussparungsboden (24) der Gegensteckverbinderaufnahmeaussparung (22) durch den Kontaktelementdurchsteckabschnitt (27) zu einem Gehäuseboden (21) des Steckverbindergehäuses (2) erstrecken.

20. Einrichtung nach einem oder mehreren der Ansprüche 17 bis 19, **dadurch gekennzeichnet, dass** das Steckverbindergehäuse (2) zumindest eine, vorzugsweise zwei Ringnuten (29) aufweist, die im Bereich des Kontaktelementdurchsteckabschnitts (27) in eine Gehäuseaußenwandung (17) eingebracht sind.

21. Einrichtung nach Anspruch 20, **dadurch gekennzeichnet, dass** in den Ringnuten (29) je ein Dichtungsring (30) angeordnet ist.

22. Einrichtung nach einem oder mehreren der Ansprüche 13 bis 21, **dadurch gekennzeichnet, dass** die Einrichtung (1) eine Hülse (10) aufweist, in der das Steckverbindergehäuse (2) gas- und insbesondere kraftstoffdicht aufgenommen ist.

23. Einrichtung nach einem oder mehreren der Ansprüche 13 bis 22, **dadurch gekennzeichnet , dass** das Steckverbindergehäuse (2) eine zylindrische Gehäuseaußenwandung (17) aufweist, wobei der Durchmesser der Gehäuseaußenwandung (17) vorzugsweise dem Durchmesser einer Hülseninnenwandung (16) entspricht oder geringfügig kleiner ist.

24. Einrichtung nach einem oder mehreren der Ansprüche 13 bis 23, **dadurch gekennzeichnet, dass** der in einer zur Pinlängsachse (36) parallelen Einsteckrichtung E gesehen zweite Kontaktierungsbereich (32) des Steckerpins (44) so ausgebildet ist, dass er problemlos durch die Durchstecköffnungen (6) durchführbar ist.

25. Einrichtung nach einem oder mehreren der Ansprüche 13 bis 24, **dadurch gekennzeichnet, dass** der Außendurchmesser des Montagebundes (40) des Steckerpins (44) größer ist als der Durchmesser der Durchstecköffnungen (6).
